# EUROPEAN PATENT SPECIFICATION

(11) **EP 0 677 902 B1**
(45) Date of publication and mention of the grant of the patent: **10.07.2002**
(21) Application number: 95105411.3
(22) Date of filing: 11.04.1995
(51) Int. Cl.: H01S 3/06

(54) **Amplifying telecommunication system for wavelength-division multiplexing transmissions**
Verstärkendes Telekommunikationssystem für Wellenlängenmultiplexübertragung
Système de télécommunication à amplificateurs pour transmission à multiplexage par division de longueurs d'onde

(30) Priority: 14.04.1994 IT MI940712
(43) Date of publication of application: 18.10.1995
(73) Proprietor: Corning O.T.I. S.p.A., 20126 Milano (IT)
(72) Inventor: Meli, Fausto, Piacenza (IT); Roba, Giacomo Stefano, Cogoleto (GE) (IT)
(74) Representative: Grunfeld, David Peter

(56) References cited:
- EP-A- 0 466 932
- ELECTRONICS LETTERS., vol.27, no.12, 6 June 1991, ENAGE GB pages 1065 - 1067, XP000237765 M.NAKAZAWA ET AL. 'Lanthanum codoped erbium fibre amplifier'
- IEEE PHOTONICS TECHNOLOGY LETTERS, vol.6, no.3, March 1994, NEW YORK US page 380-382, XP000439714 R.G.SMART ET AL. 'Gain peaking in a chain of 980 nm-pumped Erbium-doped fiber amplifier'
- ELECTRONICS LETTERS., vol.26, no.18, 30 August 1990, ENAGE GB pages 1527 - 1528 Y.MIYAJIMA ET AL. '20 db gain at 1.55 um wavelength in 50 cm long Er3+-doped fluoride fibre amolifier'
- ELECTRONICS LETTERS., vol.26, no.8, 14 April 1990, ENAGE GB pages 500 - 501, XP000116427 H.TAGA ET AL. '459km, 2.4 Gbit/s four wavelength multiplexing optical fibre transmission experiment using six Er-doped fibre amplifier'

## Description

The present invention relates to a telecommunication system including optical amplifiers, particularly adapted for a wavelength-division multiplexing transmission (in the following referred to as "WDM transmission").

For a WDM transmission several channels or several transmission signals independent of each other are required to be sent over the same line consisting of an optical fibre, by multiplexing in the optical frequency region; the transmitted channels can be both digital and analog and are distinguished from each other because each of them is associated with a specific frequency.

In this kind of transmission the different channels must be substantially equivalent to each other, that is none of them must be more or less privileged relative to the others, in terms of signal level or quality.

In the presence of amplifiers, in particular optical amplifiers, they are required to substantially have the same response for all transmitted channels; in addition, in order to transmit a high number of channels, the band in which the amplifier can operate must be wide.

Optical amplifiers are based on the properties of a fluorescent dopant, and in particular erbium, introduced as the dopant into an optical fibre core; in fact, erbium, excited by administration of luminous pumping energy, has a high emission in the wavelength range corresponding to the minimum light attenuation in silica-based optical fibres.

When an erbium-doped fibre, where erbium is held to an excited state, is passed through by a luminous signal having a wavelength corresponding to such a high emission, the signal causes the transition of the erbium atoms excited to a lower level and a luminous emission stimulated to the wavelength of the signal itself, thereby generating a signal amplification.

Starting from the excited state, decay of the erbium atoms takes place also spontaneously and this generates a random emission constituting a "background noise" overlapping the stimulated emission corresponding to the amplified signal.

The luminous emission generated by admitting luminous pumping energy to the "doped" or active fibre can take place at several wavelengths typical of the doping substance, thereby giving origin to a fluorescence spectrum in the fibre.

For the purpose of achieving the greatest amplification signal by a fibre of the above type, together with a high signal/noise ratio suitable for a correct reception of the signal itself, in optical telecommunications a signal is usually used which is generated by a laser emitter at a wavelength corresponding to the maximum, in the intended band, of the fluorescence spectrum curve in the fibre incorporating the employed doping substance, or emission peak.

Erbium-doped fibres, on the other hand, have an emission spectrum with a peak of limited width the features of which vary depending on the glass system into which erbium is introduced as the dopant, and a spectrum area of such a high intensity in a wavelength range contiguous to the above peak, within the wavelength range of interest, that the use of optical amplifiers for amplifying signals in a wide band is deemed possible.

Known erbium-doped fibres however exhibit an uneven course of the emission spectrum; this uneven course conditions the possibility of achieving a uniform amplification over the whole selected band.

In order to achieve a substantially "flat" gain curve, that is a gain as much constant as is possible at the different wavelengths, by eliminating noise sources due to a spontaneous emission, filtering elements may be used such as those described for example in patents EP 426,222, EP 441,211 and EP 417,441 in the name of the same Applicant.

In such patents, however, the amplifiers' behaviour in the presence of a wavelength division multiplexing is not described and in addition a behaviour in the presence of several amplifiers connected to each other in cascade has not been taken into account.

The emission spectrum profile greatly depends on the dopants present in the fibre core in order to increase the refraction index thereof, as shown for example in US 5,282,079, in which the fluorescence spectrum of an alumina/erbium-doped fibre is shown to have a less marked peak than a germanium-erbium-doped fibre and shifted to lower wavelengths (the maximum is at about 1532 nm); such a fibre had a numerical aperture (NA) of 0.15.

In ECOC '93, ThC 12.1, pages 1-4, a fibre for an optical amplifier doped with Al and La and having a very low responsiveness to hydrogen is disclosed; the described Al-doped fibre has a numerical aperture of 0.16 and the Al-La-doped fibre has a numerical aperture of 0.30.

In ECOC '93, Tu 4, pages 181-184, optical amplifiers having erbium-doped fibres are disclosed; experiments carried out with fibres the cores of which are doped with aluminium, aluminium/germanium and lanthanum/aluminium are described and the best results appear to be reached with Al/La-co-doped fibres.

In Electronics Letters, 6 June 1991, vol. 27, No. 12, pages 1065-1067, it is pointed out that in optical amplifiers having an erbium-doped fibre, a co-doping with alumina enables a larger and flatter gain profile to be reached; described in the article are amplifiers having an alumina-, germanium- and erbium-doped fibre as compared with amplifiers having a lanthanum-, germanium- and erbium-doped fibre and it is therein stated that the greatest gain flattening is obtained by the former.

In ECOC '91, TuPS1-3, pages 285-288 a fibre of the Al₂O₃-SiO₂ type doped with Er and La is described for the purpose of obtaining a higher refractive index and reducing the formation of clusters containing erbium ions. The fluorescence and absorption spectra of the Er/La-doped fibre have proved to be very similar to those of an erbium-doped Al₂O₃-SiO₂ fibre; a numerical aperture (NA) of 0.31 has been achieved and an erbium concentration of 23.10¹⁸ cm⁻³.

In ECOC '89, Post-Deadline Papers, PDA-8, pages 33-36, 10-14 September, 1989, an experiment made with twelve optical amplifiers connected in cascade using an erbium-doped fibre is disclosed; a single signal wavelength of 1.536 µm has been used and it is pointed out that a signal wavelength control in the order of 0.01 nm is required for a steady operation, in view of the fact that BER (Bit Error Rate) features rapidly decay on changing the signal wavelength.

US Patent 5,117,303 discloses an optical transmission system comprising locked optical amplifiers that, based on the stated calculations, when operating in a saturated manner give a high signal/noise ratio.

The described amplifiers have an erbium-doped fibre having an Al₂O₃-SiO₂ core and the use of filters is provided; the calculated performance is achieved at a single wavelength and a signal supply in a wide wavelength band offering the same performance is not provided.

According to the present invention, it has been found that a particular combination of dopants in the core of an active optical fibre makes it possible to accomplish a fibre having a high numerical aperture together with an emission spectrum the features of which enable optical amplifiers to be made which, particularly in a wavelength multiplexing system, give a uniform response to the different wavelengths in the provided wavelength range, both in the case of a single amplifier and in the case of several amplifiers connected in cascade.

The present invention, in one aspect, relates to a method of achieving the control of the optical signal/noise ratio on reception, in a predetermined wavelength band, in an optical telecommunication system, in accordance with claim 1.

In particular, said predetermined wavelength band is preferably included between 1525 and 1560 nm.

Preferentially said optical signal/noise ratio, measured at a 0.5 nm filter width, is greater than 15 dB.

In a preferred embodiment, said system is comprised of at least two active-fibre optical amplifiers interposed in series along said optical fibre line.

In a preferred embodiment of the method of the invention, the dopant selection in the fibre reduces said depression to a value lower than 1 dB relative to the emission value in at least one of the adjacent zones in said band.

The invention, according to a second aspect, relates to an active-fibre optical amplifier, in accordance with claim 6.

In said amplifier, said main fluorescent dopant is erbium, preferably in the form of an oxide, and said secondary dopants are aluminium, germanium, lanthanum, preferably in the form of the respective oxides.

In particular, said active-fibre optical amplifier has an emission curve, in said predetermined wavelength band clear of depressions, of a value higher than 1 dB relative to the emission value in at least one of the adjacent zones in said band and preferentially not higher than 0.5 dB.

Preferentially said active fibre has a numerical aperture greater than 0.18.

The present invention in further aspects relates to an active optical amplifier as defined in claim 21, as well as to a telecommunication system as defined in claim 25.

Embodiments of the invention are set out in the dependent claims. Greater details will appear from the following description, with reference to the accompanying drawings, in which:
- Fig. 1 shows a diagram of an amplifier;
- Fig. 2 is a diagram of an amplifier with a notch filter;
- Fig. 3 is a diagram of an experimental configuration for determination of the spectral emission graphs for different types of optical fibre;
- Fig. 4 shows the spectral emission graphs for different types of active fibre detected by adopting the experimental configuration in Fig. 3;
- Fig. 5 shows the gain curves of the amplifier seen in Fig. 1, for signals at different wavelengths and two different levels of input power, with a fibre in accordance with the invention;
- Fig. 6 shows the gain curves of the amplifier seen in Fig. 2, for signals at different wavelengths and three different levels of input power, with a fibre in accordance with the invention;
- Fig. 7 shows the gain curves of the amplifier seen in Fig. 2, for signals at different wavelengths and three different levels of input power, with a known fibre;
- Fig. 8 is a diagram showing a transmission experiment comprising several amplifiers in cascade, in the presence of two signals at different wavelengths multiplexed in the same line;
- Fig. 9 shows BER (Bit Error Rate) graphs detected in the experiment according to the diagram in Fig. 8, using different amplifiers;
- Fig. 10 shows the diagram of a transmission experiment comprising several amplifiers in cascade, in the presence of four signals at different wavelengths multiplexed in the same line;
- Fig. 11 shows the signal power levels at the input of the first amplification stage in the experiment of Fig. 10, using amplifiers according to the invention;
- Fig. 12 shows the signal power levels at the input of the second amplification stage in the experiment of Fig. 10;
- Fig. 13 shows the signal power levels at the input of the third amplification stage in the experiment of Fig. 10;
- Fig. 14 shows the signal power levels at the input of the fourth amplification stage in the experiment of Fig. 10;
- Fig. 15 shows the signal power levels at the pre-amplifier input in the experiment of Fig. 10;
- Fig. 16 shows the signal power levels at the pre-amplifier input in an experiment according to the configuration of Fig. 10, using amplifiers of a known type.

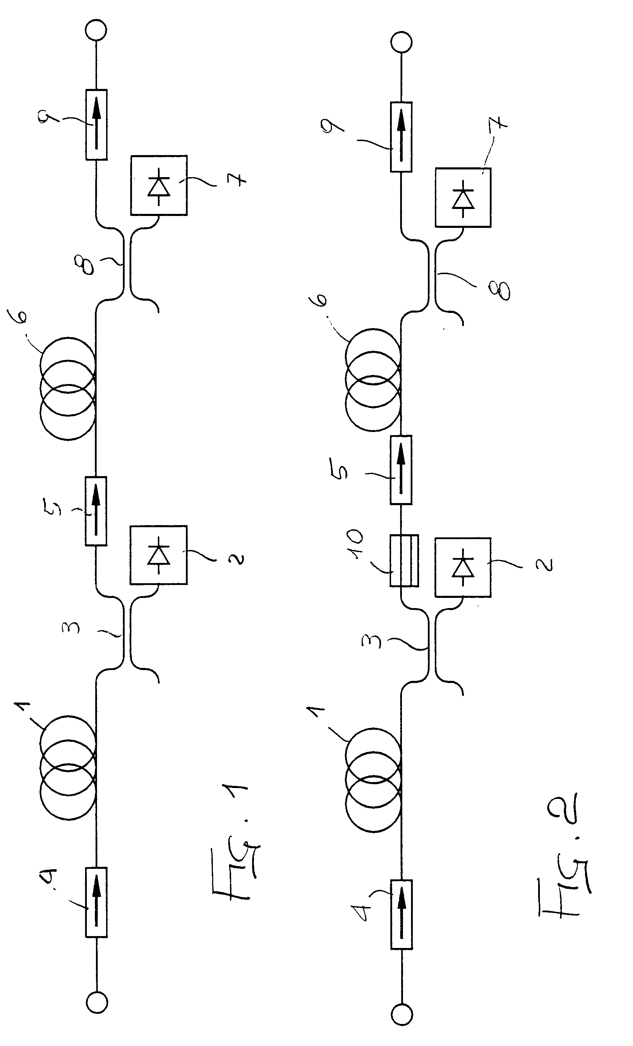

As shown in Fig. 1, an amplifier provided for use as a line amplifier, comprises one erbium-doped active fibre 1 and a respective pump laser 2, connected thereto by a dichroic coupler 3; one optical isolator 4 is disposed upstream of the fibre 1, in the path direction of a signal to be amplified, whereas a second optical isolator 5 is disposed downstream of the active fibre itself.

Conveniently, although not necessarily, the dichroic coupler 3 is located (as shown) downstream of the active fibre 1, so that it supplies pump energy countercurrent to the signal.

The amplifier further comprises a second erbium-doped active fibre 6 associated with a respective pump laser 7 by means of a dichroic coupler 8, also connected by countercurrent pumping in the example shown; therefore a further optical isolator 9 is present downstream of the fibre 6.

Pump lasers 2, 7 are laser of the Quantum Well type and have the following features:
- emission wavelength λₚ = 980 nm;
- maximum optical power at the exit Pᵤ = 89 mW. Lasers of the above type are produced for example by LASERTRON INC., 37 North Avenue, Burlington, MA (US).

The dichroic couplers 3, 8 are melted-fibre couplers formed of single-mode fibres at 980 nm and in the 1530-1560 nm wavelength band, with variations < 0.2 dB in the output optical power depending on polarization.

Dichroic couplers of the above type are known and available on the market and are for example produced by GOULD Inc., Fibre Optic Division, Baymeadow Drive, Gelm Burnie, MD (US) and SIFAM Ltd., Fibre Optic Division, Woodland Road, Torquay, Devon (GB).

Optical isolators 4, 5, 9 are optical isolators in which the polarization control is independent of the transmission signal polarization and have an isolation greater than 35 dB and a reflectivity lower than -50 dB.

The isolators herein used are a MDL I-15 PIPT-A S/N 1016 model available from ISOWAVE, 64 Harding Avenue, Dover, New Jersey, US:

Shown in the diagram of Fig. 2 is an alternative embodiment of an amplifier in which corresponding elements have been allocated the same reference numerals as in Fig. 1.

In such an amplifier, the components of which have the same features as above described, a notch filter 10 is present, which consists of an optical fibre portion having two optically-coupled cores and at a preselected wavelength, one of said cores being coaxial with the connected optical fibres and the other being off-centre and cut off at the ends, as described in Patents EP 441,211 and EP 417,441.

This filter is such sized that it couples in the off-centre core a wavelength (or a wavelength band) corresponding to a portion of the amplifier emission spectrum; the off-centre-core cutting-off at the ends enables the wavelength transferred thereto to be dispersed in the fibre cladding so that it is no longer re-coupled in the main core.

In the example shown, the two-core filter 10 had the following features:

| | |
|---|---|
| wavelength band coupled in the second core BW(-3dB) | 8-10 nm |
| filter length | 35 mm |

The filter was such sized that it had the maximum attenuation at the emission peak of the active fibre used.

Alternatively, filters having the following values were used in the experiments carried out:
attenuation at λₛ 1530 nm 5 dB or
attenuation at λₛ 1532 nm 11 dB

Such a filter aims to reduce the intensity of a specific wavelength zone, in particular the fibre emission peak, in order to obtain a gain curve of the amplifier as much constant (or "flat") as is possible, on varying of the wavelength.

This requirement is particularly important in WDM telecommunications in which amplification conditions as much uniform as is possible are desired for each channel.

For use in the above described amplifiers different types of erbium-doped active fibres were accomplished the compositions and optical features of which are summarized in the following table 1.

**TABLE 1**

| Fibre | Al₂O₃ | | GeO₂ | | La₂O₃ | | Er₂O₃ | | NA | λ_{c} |
|---|---|---|---|---|---|---|---|---|---|---|
| | wt% | (mol%) | wt% | (mol%) | wt% | (mol%) | wt% | (mol%) | | nm |
| A | 4 | (2.6) | 18 | (11.4) | 1 | (0.2) | 0.2 | (0.03) | 0.219 | 911 |
| B | 1.65 | (1.1) | 22.5 | (14.3) | 0 | (0) | 0.2 | (0.03) | 0.19 | 900 |
| C | 4 | (2.6) | 18 | (11.4) | 0 | (0) | 0.2 | (0.03) | 0.20 | 1025 |
| D | 4 | (2.6) | 0 | (0) | 3.5 | (0.7) | 0.2 | (0.03) | 0.19 | 900 |

wherein:
wt% = (average) percent content by weight of oxide in the core
mol% = (average) percent content by mole of oxide in the core
NA = Numerical Aperture (n1² - n2²) ½
λ_{c} = cut-off wavelength (LP11 cut-off).

Analyses of the compositions were made on a preform (before the fibre drawing) by a microprobe combined with a scanning electron microscope (SEM Hitachi).

Analyses were conducted at 1300 magnifications on discrete points disposed along a diameter and separated from each other by 200 µm.

The stated fibres were made following the technique of the vacuum plating, within a quarz glass tube.

In the stated fibres, the incorporation of germanium as the dopant into the SiO₂ matrix in the fibre core is obtained during the synthesis step.

The incorporation of erbium, alumina and lanthanum into the fibre core was obtained by the "solution doping" technique, in which an aqueous solution of the dopant chlorides is put into contact with the synthesis material of the fibre core, while it is in a particulate state, before hardening of the preform.

More details on the solution doping technique can be found for example in US 5,282,079.

The greater numerical aperture value (NA) of fibre A relative to the comparison fibres was caused by the fact that, in making the fibre core, the modification of the reagent flow previously adopted for making fibre C (Al/Ge/Er) has been omitted, in particular closure of the germanium supply has been forgotten.

Therefore the subsequent incorporation of lanthanum and aluminium by solution doping has brought to a value of the refractive index of the core higher than expected, in addition to the unexpected advantages achieved in terms of amplification and transmission described in the following.

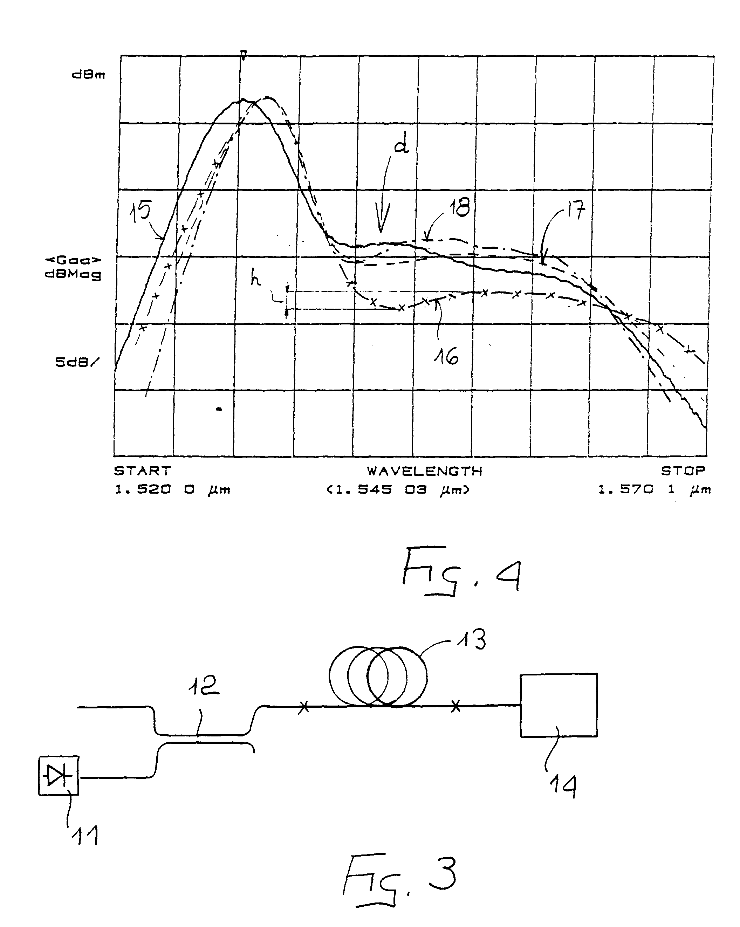

The experimental configuration adopted for determining the spectral emission of the fibres taken into consideration is diagrammatically shown in Fig. 3, whereas the spectral emission graphs measured on the active fibres A, B, C, D are reproduced in Fig. 4.

A pump laser diode 11, at 980 nm, was connected through a 980/1550 dichroic coupler 12 to the active test fibre 13; the fibre emission was detected through an optical spectrum analyser 14.

The laser diode 11 had a power of about 60 mW (in the fibre 13). The active fibre 13 had a length corresponding to an efficient amplification for the adopted pump power; for the fibres under examination all of which had the same erbium content, such a length was about 11 m.

For different erbium contents in the fibres, an appropriate length can be determined by adopting criteria known to a person skilled in the art.
The optical spectrum analyser was a TQ8345 model produced by ADVANTEST CORPORATION, Shinjuku - NS Bldg. 2-4-1 Nishi-Shinjuku, Shinjuku-ku Tokyo (JP).

A measurement was carried out keeping the fibre pumped to 980 nm and detecting the spontaneous emission spectrum of the fibre.

The achieved results are shown in Fig. 4 wherein curve 15 corresponds to fibre A, curve 16 corresponds to fibre B, curve 17 corresponds to fibre C and curve 18 corresponds to fibre D.

As noted from the graphs, the spectrum emission from fibres B, C, D has a main peak of great intensity with a maximum at about 1532.5 nm and a subsequent zone of high emission at higher wavelengths, until about 1560-1565 nm, inclusive of a secondary greatly broadened peak.

A comparison between curves 16 and 17 (fibres B and C, respectively) shows that a greater alumina content in the fibre raises the level of said high-emission zone; the substitution of lanthanum for germanium (fibre D, curve 18) enables a still higher level to be reached in the 1535-1560 nm range.

On the other hand, in all fibres B, C, D the presence of a depression was observed in a zone d in the spectrum (localized between about 1535 and 1540 nm), included between the main emission peak and contiguous thereto, and the secondary emission peak; in such a depression the emission value is lower by at least 2 dB than the maximum emission value in the adjacent zones (that is both the main peak and the secondary peak), as shown in the figure by reference h for curve 16 alone, but clearly identifiable for curves 17 and 18 too.

Curve 15, on the contrary, shows that under the experimental conditions shown, fibre A in zone d does not show an important depression in the spectrum (or, where a depression is detectable, it is at all events lower than about 0.5 dB).

Curve 15 also shows that the maximum-emission peak of fibre A is at lower wavelengths than fibres B, C, D, being localized at about 1530 nm, and that the fibre holds a high emission level as far as close to 1520 nm.

Using fibre A, amplifiers of the structure shown in Figs 1 and 2 were done.

The first active fibre 1 was about 8 m long, whereas the second active fibre 6 was about 15 and 13 m long, in the cases of Fig. 1 and Fig. 2 respectively.

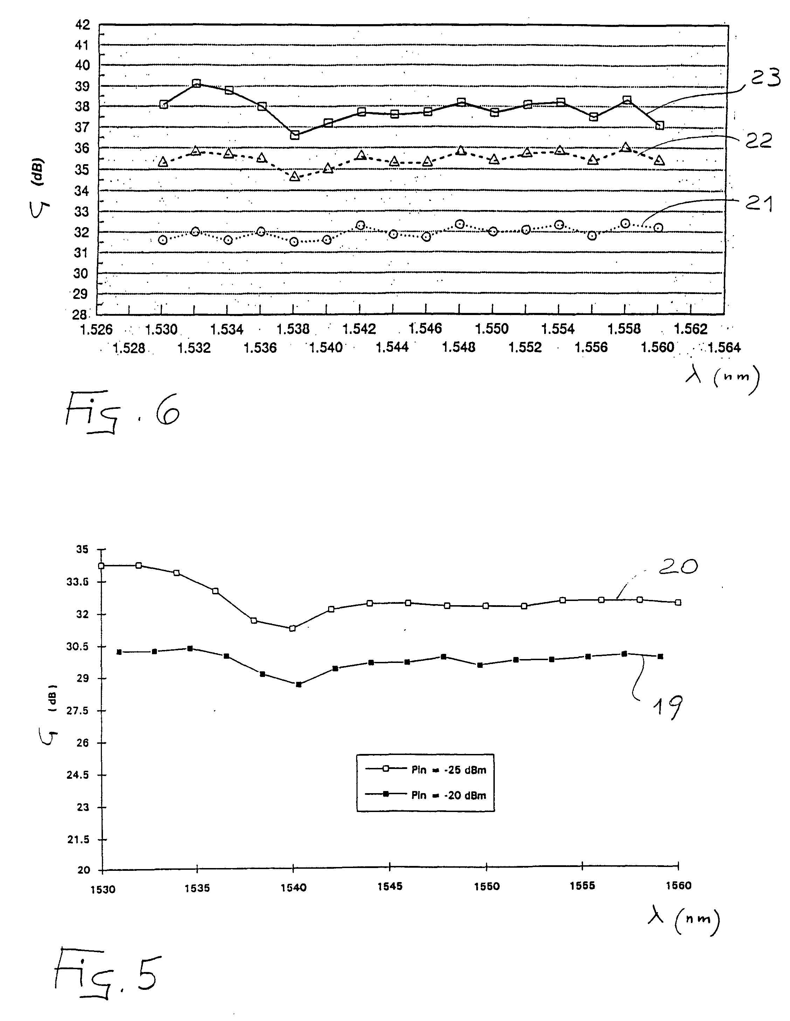

Shown in Fig. 5 are the gain curves at different wavelengths, for two different input power levels, for the amplifier of Fig. 1, whereas shown in Fig. 6 are the gain curves at the different wavelengths of the amplifier shown in Fig. 2, for three different input power levels.

In particular, curve 19 in Fig. 5 refers to a -20 dBm input power, whereas curve 20 refers to a -25 dBm input power in the amplifier of Fig. 1.

Curve 21 in Fig. 6, in turn, refers to a -20 dBm input signal power in the amplifier of Fig. 2, curve 22 refers to a -25 dBm input signal power and curve 23 refers to a -30 dBm input signal power.

As can be seen from the figures, in particular by comparing curves 19 and 21, corresponding to a -20 dBm power level which is of particular interest for telecommunications, both in the absence and in the presence of a filter, the use of a fibre having a core doped with alumina, germanium and lanthanum, in addition to erbium, enables a substantially flat gain curve to be achieved, particularly at the zone between 1536 and 1540 nm, which result can be also reached in the absence of a filter.

In particular, in the absence of a filter at -20 dBm the gain difference between signals at different wavelengths was lower than 1.6 dB, whereas in the presence of a filter, at -20 dBm, the gain difference between signals at different wavelengths was lower than 0.9 dB.

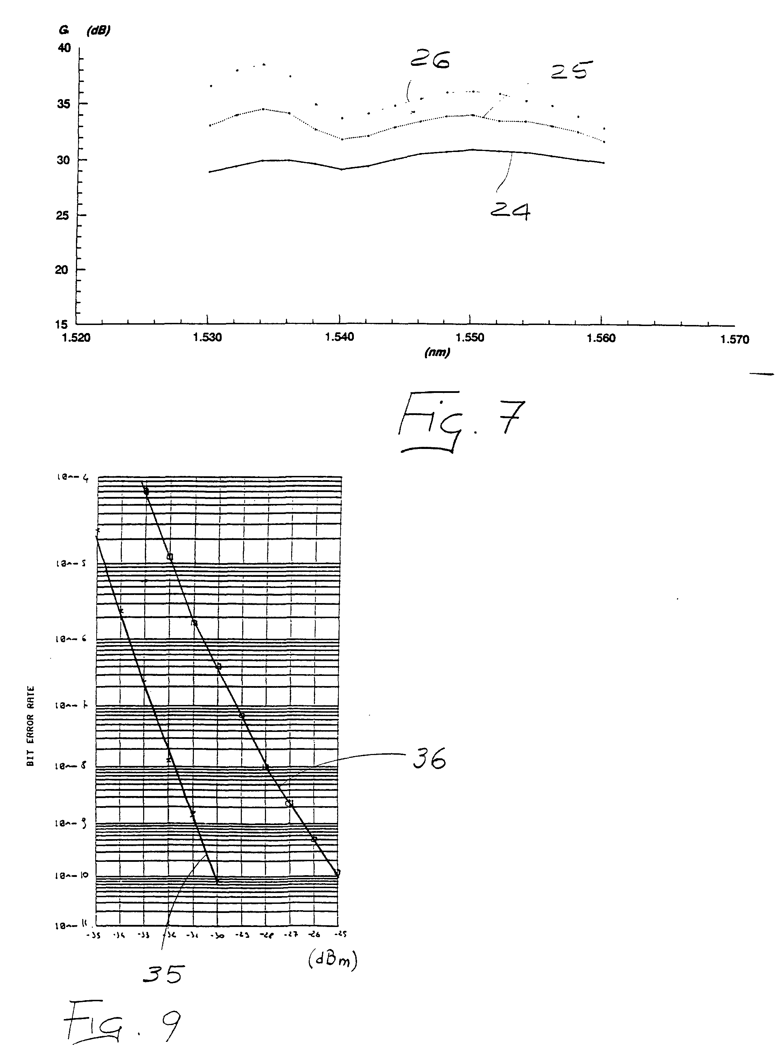

Shown in Fig. 7 are the gain curves at different wavelengths for three different input power levels of an amplifier having the structure shown in Fig. 2, made from fiber C (Al/Ge/Er).

In particular, curve 24 of Fig. 7 refers to a -20 dBm input signal power, curve 25 refers to a -25 dBm input signal power and curve 26 refers to a -30 dBm input signal power.

At -20 dBm the gain difference between signals at different wavelengths was about 2.1 dB.

As discernible by comparison, fibre A (Al/Ge/La/Er) also in an amplifier devoid of filter gives rise to a much flatter gain curve than fibre C (Al/Ge/Er) in an amplifier provided with a filter.

Using the amplifiers of Fig. 1 and Fig. 2, made either of fibre A (Al/Ge/La/Er) or of fibre C (Al/Ge/Er), transmission tests over long distances with several amplifiers in cascade, that is serially connected, were carried out. One experimental configuration used is shown in Fig. 8.
One signal 27, at a wavelength λ₁ = 1536 nm, and a second signal 28, at a wavelength λ₂ = 1556 nm were fed to a fibre 29 through a multiplexer 30.

One attenuator 31 was placed downstream of a power amplifier 32a; other subsequent attenuators 31, equal to each other, were disposed on the line along which four amplifiers 32, 32', 32", 32"' in succession were disposed before a receiver 33.

The receiver 33 was preceded by an optical demultiplexer 34 consisting of an interferential filter having a band width of 1 nm at -3dB, by which the detected wavelength was selected.

Signals 27, 28, generated by respective lasers, had each a 0 dBm power; the overall power multiplexed in fibre 29 was of 0 dBm (as a result of a 3 dB coupling loss).

Multiplexer 30 was a "coupler 1x2" produced by E-TEK DYNAMICS INC., 1885 Lundy Aven, San Jose, CA (US).

The power amplifier 32a was a fibre optic amplifier commercially available and having the following features:

| | |
|---|---|
| input power | from -5 to +2 dBm |
| output power | 13 dBm |
| work wavelength | 1530-1560 nm. |

The power amplifier was devoid of a notch filter.
A TPA/E-12 model available from the applicant was used. The amplifier utilized a C type (Al/Ge/Er) erbium-doped active optical fibre.

By power amplifier it is intended to mean an amplifier operating under saturation conditions, in which the output power depends on the pumping power, as described in detail in patent EP 439,867.

After the first attenuator 31, at the amplifier 32 input, the overall optical power was about -18 dBm.

As the actuators 31, a Va5 model available from JDS FITEL INC., 570 Heston Drive, Nepean (Ottawa), Ontario (CA) was used and each of them supplied a 30 dB attenuation corresponding to about 100 km of optical fibre.

Amplifiers 32, 32', 32", 32"' were identical and each of them supplied a gain of about 30 dB for both wavelengths λ ₁ and λ₂, at an overall output power of + 12 dBm.

Signal 27, at a wavelength λ₁ = 1536 nm, was a signal directly modulated at 2.5 Gbit/s, generated by a DFB laser, incorporated in the SLX-1/16 Model SDH terminal apparatus, commercially available from PHILIPS NEDERLAND BV, 2500BV 's Gravenhage (NL), constituting the receiver 33.

Signal 28, at a wavelength λ₂ = 1556 nm was a continuous signal (CW), generated by a MG0948L3 model DFB laser, of a 0 dBm power, produced by ANRITSU CORPORATION, 5-10-27 Minato-ku, Tokyo (JP). The interferential filter 34 was a TB4500 model, produced by the aforementioned JDS FITEL INC.

### Experiment 1

In a first experiment amplifiers with fibre A (Al/Ge/La/Er) having the configuration shown in Fig. 1, that is devoid of the notch filter 10, were used.

### Experiment 2

In a second experiment amplifiers with fibre A (Al/Ge/La/Er) having the configuration shown in Fig. 2, that is provided with a notch filter 10, were used.
Through the receiver 33 the bit error rate (BER) was measured on varying of the average reception power, for the signal at the λ₁ (1536 nm) wavelength.

The results are shown in the diagram in Fig. 9, in which curve 35 relates to experiment 1 and curve 36 relates to experiment 2.

As shown in the diagram in Fig. 9, in spite of the fact the the gain curve of the single amplifier with fiber A (Al/Ge/La/Er) and provided with a notch filter was substantially identical with, and even flatter than that of the amplifier with fiber A and devoid of a notch filter 10, in a cascade configuration the signal at 1536 nm appeared penalized giving a remarkably higher error rate, the reception power being equal.

### Experiment 3

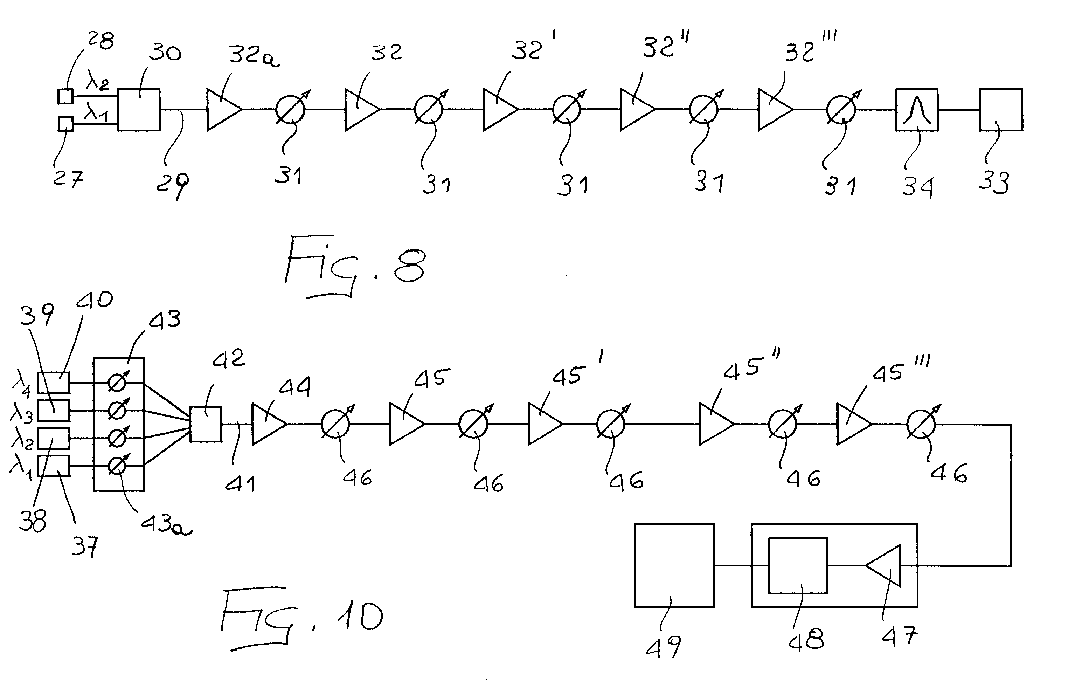

A second experimental configuration used is shown in Fig. 10. In such a test four signals 37, 38, 39, 40 at wavelengths λ₁ = 1536 nm, λ₂ = 1556 nm, λ₃ = 1550 nm and λ₄ = 1544 nm were fed to a fibre 41, through a wavelength multiplexer 42.

The signal level at the line entry was adjusted through a pre-equalizer 43; after a power amplifier 44 signals were sent to a line including four line amplifiers 45, 45', 45", 45"' having respective attenuators 46 interposed therebetween in order to simulate respective optical fibre lengths.

The receiving station was comprised of a pre-amplifier 47, an optical demultiplexer 48 and a receiver 49.

The signals were respectively generated from a DFB laser at 1536 nm, directly modulated at 2.5 Gbit/s, incorporated in the terminal apparatus constituting the receiver 49; from a DFB laser at 1556 nm, of the continuous-emission type, produced by ANRITSU; from a DFB laser at 1550 nm, of the continuous-emission type, produced by ANRITSU; from an ECL laser, at a variable wavelength preselectioned to 1544 nm, of the continuous-emission type, model HP81678A, produced by HEWLETT PACKARD COMPANY, Rockwell, MD (US).

The pre-equalizer 43 was comprised of four variable attenuators 43a, produced by JDS, the attenuation of which was set depending on the optical power of the respective channel.

The multiplexer 42 was made by means of a 1x4 splitter, produced by the aforementioned E-TEK DYNAMICS.

The power amplifier 44 was a TPA/E-13 model commercially available from the applicant and already described.

The amplifiers 45, 45', 45", 45"' were identical with each other and each provided a gain of about 30 dB, at an overall output power of +12 dBm.

The amplifiers 45 had the structure shown in Fig. 1 and utilized fiber A (Al/Ge/La/Er).

The attenuators 46 provided each an attenuation of 30 dB, corresponding to about 100 km of optical fibre.

The optical attenuators were a VA5 model produced by the aforementioned JDS FITEL.

The preamplifier 47 was a commercially available optical preamplifier having the following features:

| | |
|---|---|
| gain | 22 dB |
| noise factor | < 4.5 dB |
| Output power | from -26 to -11 dB |
| work wavelength | 1530-1560 nm |

A RPA/E-F model, commercially available from the Applicant was used; the amplifier utilized an active fibre type C (Al/Ge/Er).

By preamplifier it is intended to mean an amplifier sized for receiving a signal having a very low intensity (-50 dBm, for example) and amplifying it, before sending it to a receiving device, until achievement of a power level adapted to the device responsiveness.

The optical demultiplexer 48 consisted of a wavelength-tunable Fabry-Perot filter, having a band width of 0.8 nm at -3 dB, incorporated in the preamplifier 47.

For carrying out the experiment, the Fabry-Perot filter was tuned to the wavelength λ = 1536 nm (identified as a critical wavelength) through a pilot tone generated from the transmitter 37.

The receiver 49 consisted of an end SDH apparatus, model SLX-1/16, commercially available from PHILIPS NEDERLAND BV, 2500BV 's Gravenhage (NL).

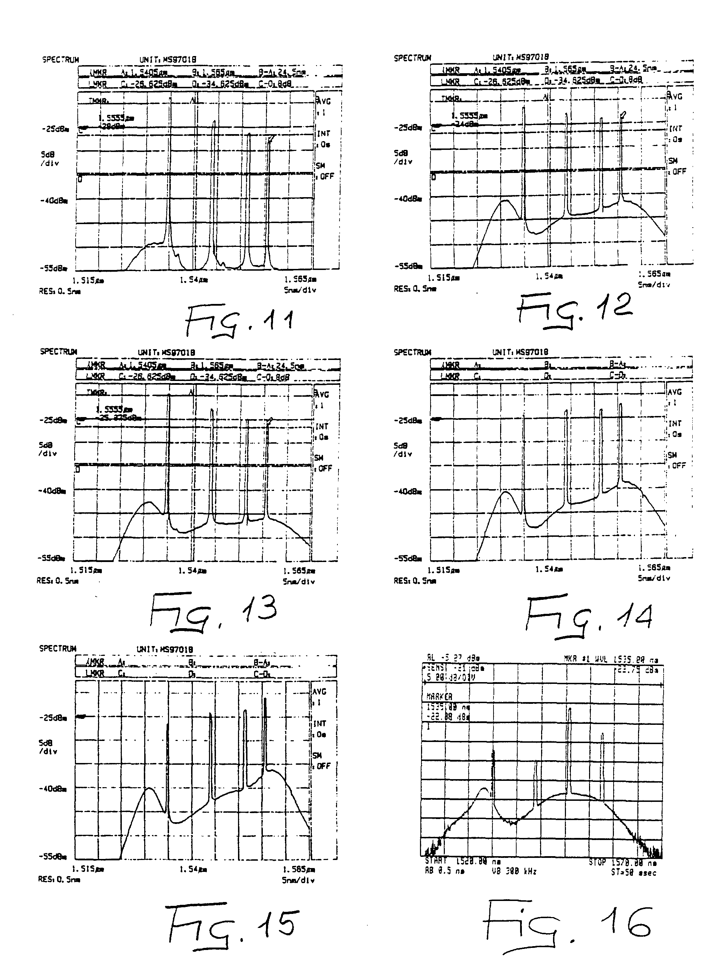

Figs. 11 to 15 show the signal course in the subsequent stages, in particular at the input of amplifier 45, amplifier 45', amplifier 45" and amplifier 45"' respectively and at the input of the preamplifier 47.

The pre-equalizer 43 applied a maximum starting pre-equalization of about 7 dB between the different channels, as shown in Fig. 11; such a pre-equalization aimed to compensate for the saturation effects at the lower wavelengths taking place in cascade amplifiers.

The pre-equalization was carried out in such a manner that the optical signal/noise (S/N) ratios at the preamplifier 47 exit could be equalized.

In the subsequent amplification stages one can see a reduction in the gain curve in the region having a smaller wavelength, due to the above described saturation phenomenon, whereas the optical S/N ratio of each of the channels remained high (S/N ≥ 15 dB with Δλ = 0.5 nm) until the pre-amplifier 47 exit.

In a corresponding experiment carried out using amplifiers according to the diagram in Fig. 2 having an active fibre of the C type and a notch filter, an important reduction in the signal power at 1536 nm and 1544 nm was found, as well as a strong unbalance in the optical S/N ratios between the different channels, as is apparent from the graph in Fig. 16, showing the powers of the different channels at the preamplifier input; a still heavier penalization is deemed to be found for a channel at about 1540 nm of wavelength.

In this case a pre-equalization would have enabled the unbalance between the different channels (some of which appeared greatly penalized in respect of others and in particular those between about 1535 and 1540 nm)) to be restrained; however, by carrying out such an equalization, an acceptable S/N ratio for all signals in the wavelength band of interest could not be at all events maintained; in fact, for being able to pre-equalize the channels one should have done a very high starting attenuation of the most favoured channels = (1550 and 1556 nm), that would have brought to an S/N ratio of very low value (in the order of 8-10 dB), thereby making a correct reception of the signals themselves impossible.

The better results achieved as compared to the use of amplifiers provided with a notch filter and an Al/Ge/Er fibre are deemed to be due to the fact that fibre A has an emission curve practically clear of depressions or local minimum of an important amount and in particular devoid of a minimum in the wavelength range contiguous to the emission peak, in the 1535-1540 nm zone.

In fact it is deemed that, when several signals at different wavelengths are simultaneously fed to the fibre, the presence of a depression or local minimum in the emission curve (apparent in the spectra of the comparative fibres) causes a signal of a wavelength corresponding to said depression to be amplified to a smaller extent than the signals at the wavelengths of the adjacent ranges.

According to the above interpretation, the greater signal amplification at the wavelengths of adjacent ranges subtracts pumping energy to the signal itself which is saturated to a low output value (that is its level after amplification does no longer depend on its input value, but only on the pump power available in the fibre), thereby incrementing the level difference between the different signals.

In the presence of cascade amplifiers and in WDM transmissions, such a phenomenon is incremented at each stage and it is deemed to be responsive of the detected unevennesses in the response, which cannot be compensated for by a pre-equalization or the like as above said.

It has been noted that the above phenomenon takes place for signals at the depression of the emission curve, due to the signal gain competition at wavelengths adjacent to the depression ones, whereas it does not occur (at least to the same extent) for signals at wavelengths located at the limits of the useful band, although to such wavelengths the emission value may be absolutely equal to or lower than the value of said depression.

According to the present invention, the incorporation of lanthanum into an Al/Ge/Er fibre has unexpectedly enabled the elimination of such local emission minimum to be achieved, although this could not be foreseen based on the available data for Al/La/Er and Al/Ge/Er fibres.

In fact, both Al/La/Er and Al/Ge/Er fibres have an important emission depression in the 1535-1540 nm zone and therefore knowing the performance of such known fibres would have excluded a different favourable behaviour for an Al/Ge/La/Er fibre and in addition such a fibre would have enabled an amplified wavelength multiplexing transmission.

Unexpectedly, according to another and still more important aspect, it has been found that in the presence of a peak within a high-emission zone, the presence of said depression contiguous to said peak or at all events in functional (negative) relation with the adjacent zones, was responsible for an insufficient value in the signal/noise ratio for signals in said depression and that an active fibre capable of intrinsically eliminating or reducing such a depression could solve the problem by enabling a WDM transmission in the presence of one or more amplifiers.

Therefore, according to the present invention, it has been found that an active fibre the dopants of which give an emission curve having a relatively high value in a wavelength band, substantially clear of local depressions in a zone within said wavelength band in functional relation with the remaining zones of said band (that would generate an important gain difference for telecommunications signals at different wavelengths within said band of wavelengths multiplexed in the fibre itself) enabled the accomplishment of amplifiers particularly adapted to be used in a telecommunications line comprising at least two serial-connected optical amplifiers, with wavelength division multiplexed signals, offering high performance.

In another aspect, according to the present invention, it has been found that the S/N ratio control in transmission systems referred to herein, can be obtained not only with the use of filters or by adopting a transmission band of restricted width (capable of avoiding including unfavoured wavelength zones), but through the dopant choice and dosing in the active fibre core of the amplifier, such that an emission curve may be drawn in a band wide enough (that is extended as far as 1525-1560 nm, or at least 1530-1560 nm) not to give rise to an unfavoured signal amplification in one or more particular zones in the emission curve, although an emission peak is present in said band.

By functional relation it is intended to mean, as above explained, that the presence of a greater emission in the zones adjacent to said depression, and in particular of an emission peak, and the presence of signals in said adjacent zones causes a penalization to the amplification of a signal at a wavelength corresponding to said depression.

By emission (or spectrum) curve having a relatively high value in a wavelength band it is intended to mean that in a given wavelength band, preferably between 1525 and 1560 nm, the pumped fibre shows an emission of a value exceeding the emission outside such a band, adapted to enable the amplification of a signal in said wavelength band; just as an indication, such a zone is identified as the zone included between two end values, at which the emission is 3 dB lower that that at a wavelength included in the interval or band (preferably in a practically constant zone of the interval). In actual fact, such a band corresponds to that at which a useful amplification can be carried out.

By emission peak it is intended to mean an emission in a wavelength range which is greatly higher than in the spectrum zones outside such a range, so that different behaviours occur with respect to signals fed to the fibre at wavelengths within and outside this range.

By important gain difference it is intended to mean for example a difference higher than 2 dB between the most favoured wavelength and the less favoured wavelength in said band (at an input power equal to or lower than -20 dBm).

By local depressions of the emission curve it is intended to mean a wavelength range within said band at which there is a secondary emission minimum, of a lower value than the emission value at either limit of said range and of a lower value by a predetermined amount than the maximum emission values in the contiguous wavelength ranges (in particular both the main emission peak of erbium, at wavelengths lower than the depression ones, and the secondary emission peak at higher wavelengths); to the ends of the present invention, values of said predetermined depression amount which are higher than 0.5 dB and, more particularly, higher than 1 dB give noticeable effects.

It has been also found that, in a line amplifier used in a system provided with several cascade amplifiers, the use of a notch filter, while capable of restricting the intensity of the main emission peak by generating a substantially flat gain curve for the individual amplifiers, does not enable the above described phenomenon to be avoided.

In fact, a notch filter, in a configuration involving several cascade amplifiers is deemed to constitute an attenuating element in the band zone at low wavelengths where it is centered, the effect of which inevitably extends to the depression zone of the emission curve; such an attenuation effect arises in addition to the above described saturation phenomenon and generates a further penalization for a signal at a wavelength in such a depression or local minimum.

The use of equivalent filter means adapted to attenuate or otherwise restrain the emission at said main peak, such as described in the above mentioned EP 426,222 for example, is deemed not to lead to important differences in performance.

To the ends of the present invention the lanthanum content in the fibre core is preferentially higher than 0.1% by mole and the germanium content is higher than 5% by mole, the Ge/La ratio being preferably maintained to 50 and at all events included between 10 and 100.

The presence of lanthanum in the fibre core enables a greater incorporation of germanium and alumina into the fibre, so that a high numerical aperture (higher than 0.18 and preferably at least equal to 0.2) is achieved, which brings about important advantages in terms of amplification efficiency and a more constant response in the band.

The presence of lanthanum, in addition, enables the erbium content in the fibre to be increased without giving rise to clustering phenomena; the erbium content may be included between 20 and 5000 ppm, or more preferably between 100 and 1000 ppm.

While described in detail with reference to the use in line amplifiers, the fibres in accordance with the present invention can be conveniently employed in a pre-amplifier too, that is in an amplifier sized for receiving a signal of very low intensity (-50 dBm for example) and amplifying it before it is sent to a receiving device.

In addition it is noted that, while optical two-stage amplifiers have been described which use two successive and separately pumped portions of active fibre, in accordance with the present invention single-stage amplifiers may also be made, for example following the construction diagrams shown in the aforementioned Patents EP 426,222 and EP 439,867 and amplifiers different in type from each other, for example mono-stage and two-stage amplifiers, can be used together in one and the same connection.

In addition, for specific requirements, in two-stage amplifiers one of them alone may be made with the fibre of the invention.

On the other hand, a person skilled in the art, taking into account the above considerations, will be able to identify specific operating conditions and specific dopant contents adapted to the intended application for the purpose of achieving the stated response results.

Within the present invention, a person skilled in the art operating with fibres containing a main dopant (preferably erbium when the telecommunications field is concerned) which is fluorescent in the wavelength range of interest, in combination with secondary dopants interacting therewith in an additive or interoperating manner, will be able to identify specific dopants or combinations thereof and relevant dosages, in order to obtain variations in the emission curve of the fibre, and corresponding performances of amplifiers and amplified systems made thereby (lasers, optical gyroscopes, and the like, as well as transmission, telecommunications or measurement systems embodying them) in order to obtain the desired performance in terms of signal/noise ratio within the band of interest.

In the specific field which is particularly of interest for the Applicant, the research has been limited to erbium as the main fluorescent dopant, and to Ge, Al, La incorporated into the fibre in the form of oxides, as the secondary dopants, because the results of this research have been sufficient to solve the specific technical problems.

The teachings given in the present invention will be used by a person of ordinary skill in the art in order to solve problems of his own which may be similar to or different from those herein described, provided that they have the same technical grounds, through the research of specific different dopants or particular dosages of same, as herein experimented and described, putting into practice or using the same functional relation between results and employed means.

A person skilled in the art is advised not to discard individual dopants or assemblies of dopants to the ends of combining them together even if, when considered separately, they give unsatisfactory results in the systems comprising them in terms of signal/noise ratio because a combination of them will be able to show better results, as is apparent from the teachings of the present invention.

## Claims

1. A method of achieving the control of the optical signal/noise ratio on reception, in a predetermined wavelength band, in an optical telecommunication system comprising:
- an optical transmitter (27,28; 37-40),
- an optical receiver (33,34; 47-49),
- an optical fibre line (29; 41) connecting said transmitter and receiver, and
- at least one active-fibre optical amplifier (32a,32-32'''; 44, 45-45''') interposed along said line,
wherein said active fibre is a silica fiber (1,6; 13) that comprises erbium as a main dopant and exhibits an emission curve having an emission zone in a wavelength range included within said predetermined wavelength band, inside which an emission depression relative to the adjacent zones in said predetermined wavelength band is present, said method comprising eliminating or reducing said depression of the emission curve through use of aluminium, germanium and lanthanum as secondary dopants in the active fibre.

2. A method according to claim 1, **characterized in that** said predetermined wavelength band is included between 1525 and 1560 nm.

3. A method according to claim 1, **characterized in that** said optical signal/noise ratio, measured at a 0.5 nm filter width, is greater than 15 dB.

4. A method according to claim 1, **characterized in that** said system comprises at least two active-fibre optical amplifiers interposed in series along said optical fibre line.

5. A method according to claim 1, **characterized in that** said depression is reduced to a value lower than 1 dB relative to the emission value in at least one of the adjacent zones in said band.

6. A silica-based active optical fibre (1,6,13), in particular for optical telecommunications amplifiers, with a numerical aperture greater than 0.15, said fibre having a core doped with erbium as a main fluorescent dopant, **characterized in that** the emission curve of said fibre in a wavelength range from 1535 to 1540 nm, in the presence of luminous pumping energy supplied to the fibre itself, is substantially clear of depressions, said core further comprising aluminium, germanium and lanthanum as secondary dopants.

7. A silica-based active optical fibre according to claim 6, **characterized in that** said emission curve has no depressions in said wavelength range of a value higher than 1 dB with respect to the emission value in at least one of the wavelength bands adjacent said wavelength range.

8. A silica-based active optical fibre according to claim 7, **characterized in that** said emission curve has no depressions in said wavelength range of a value higher than 0.5 dB with respect to the emission value in at least one of the wavelength bands adjacent said wavelength range.

9. A silica-based active optical fibre according to claim 6, **characterized in that** said main fluorescent dopant is incorporated into the fibre in the form of an oxide.

10. A silica-based active optical fibre according to claim 6, **characterized in that** said secondary dopants are incorporated into the fibre in the form of the respective oxides.

11. A silica-based active optical fibre according to claim 10, **characterized in that** the lanthanum content in the fibre core expressed as an oxide, is higher than 0.1% by mole.

12. A silica-based active optical fibre according to claim 11, **characterized in that** the lanthanum content in the fibre core expressed as an oxide is equal to or greater than 0.2% by mole.

13. A silica-based active optical fibre according to claim 10, **characterized in that** the germanium content in the fibre core expressed as an oxide is higher than 5% by mole.

14. A silica-based active optical fibre according to claim 13, **characterized in that** the molar ratio between the lanthanum content and germanium content in the fibre core, expressed as oxides, is included between 10 and 100.

15. A silica-based active optical fibre according to claim 14, **characterized in that** the molar ratio between the lanthanum content and germanium content in the fibre core, expressed as oxides, is about 50.

16. A silica-based active optical fibre according to claim 10, **characterized in that** the aluminium content in the fibre core, expressed as an oxide, is higher than 1% by mole.

17. A silica-based active optical fibre according to claim 16, **characterized in that** the aluminium content in the fibre core, expressed as an oxide, is higher than 2% by mole.

18. A silica-based active optical fibre according to claim 9, **characterized in that** the erbium content in the fibre core expressed as an oxide is included between 20 and 5000 ppm by mole.

19. A silica-based active optical fibre according to claim 18, **characterized in that** the erbium content in the fibre core expressed as an oxide is included between 100 and 1000 ppm by mole.

20. A silica-based active optical fibre according to claim 6, **characterized in that** the numerical aperture of the fibre is higher than 0.18.

21. An active-fibre optical amplifier, comprising:
- at least one length of silica-based active optical fibre (1,6,13) according to any one of claims 6 to 20,
- pumping means (2,7; 11) for said active fibre, adapted to supply optical pumping power at a pumping wavelength,
- coupling means (3,8; 12) within said active fibre of said optical pumping power and one or more transmission signals, at transmission wavelengths included in a predetermined transmission band,
**characterized in that** said dopants of said active fibre are chosen in functional relation with each other such that the signal/noise ratio at the amplifier output for signals with wavelength in said predetermined transmission band, measured at a 0.5 nm filter width, is not lower than 15 dB.

22. An active-fibre optical amplifier according to claim 21, **characterized in that** said predetermined transmission band is included between 1525 and 1560 nm

23. An active-fibre optical amplifier according to claim 21, **characterized in that** said dopants of said active fibre are selected in functional relation with each other so that the maximum gain variation between two signals at different transmission wavelengths in said band, measured at an input power ≤ -20 dBm, is lower than 2.5 dB, in the absence of filtering means associated with said active fibre.

24. An active-fibre optical amplifier according to claim 21, **characterized in that** it comprises two silica-based active fibres (1, 6) provided with respective pumping means.

25. A telecommunication system comprising:
- a transmission station generating at least two optical signals with different wavelengths in a predetermined wavelength band comprising a range around 1535-1540 nm, at least one of said signal wavelengths being comprised in said range around 1535-1540 nm,
- a receiving station,
- an optical fibre connecting line between said transmission station and receiving station, and
- at least one active-fibre optical amplifier according to any one of claims 21 to 23, connected in series along said line,
operatively connected to each other for transmitting said optical signals from said transmission station to said receiving station.

26. A telecommunication system according to claim 25, **characterized in that** at least two optical amplifiers are connected in series along the line.

## Patentansprüche

1. Verfahren zum Erzielen der Steuerung des optischen Signal- /Rausch-Verhältnisses beim Empfang, in einem vorbestimmten Frequenzband, in einem Telekommunikationssystem, welches aufweist:
- einen optischen Sender (27,28; 37 - 40),
- einen optischen Empfänger (33, 34; 47 - 49),
- eine optische Faserleitung (29; 41), welche den Sender und den Empfänger verbindet, und
- wenigstens einen Aktiv-Faser-Optischen-Verstärker (32a, 32-32'''; 44, 45-45'''), welcher in der Leitung angeordnet ist,
wobei die aktive Faser eine Silizium-Faser (1, 6; 13) ist, welche Erbium als einen Hauptdotierstoff aufweist und eine Emissionskurve zeigt, welche eine Emissionszone in einem Wellenlängenbereich hat, der innerhalb des vorbestimmten Frequenzbandes eingeschlossen ist, innerhalb dessen eine Einsattelung der Emission bezüglich der benachbarten Zonen in dem vorbestimmtem Frequenzband vorliegt, wobei das Verfahren aufweist, das Eliminieren oder Reduzieren der Einsattelung der Emissionskurve durch das Verwenden von Aluminium, Germanium und Lanthan als zweite Dotierstoffe in der aktiven Faser.

2. Verfahren nach Anspruch 1, **dadurch gekennzeichnet, dass** das vorbestimmte Frequenzband zwischen 1525 und 1560 nm liegt.

3. Verfahren nach Anspruch 1, **dadurch gekennzeichnet, dass** das optische Signal-/Rausch-Verhältnis, mit einer Filterbreite von 0,5 nm gemessen, größer als 15 dB ist.

4. Verfahren nach Anspruch 1, **dadurch gekennzeichnet, dass** das System wenigstens zwei Aktiv-Faser-Optische-Verstärker aufweist, welche in der optischen Faserleitung angeordnet sind.

5. Verfahren nach Anspruch 1, **dadurch gekennzeichnet, dass** die Einsattelung auf einen Wert kleiner als 1 dB bezüglich des Emissionswertes in wenigstens einer der benachbarten Zonen in dem Band reduziert wird.

6. Auf Silizium basierende aktive optische Faser (1, 6, 13), speziell für optische Telekommunikationsverstärker, mit einer numerischen Apertur größer als 0,15, wobei die Faser einen Kern hat, der mit Erbium als ein Hauptfluoreszenzdotierstoff dotiert ist, **dadurch gekennzeichnet, dass** die Emissionskurve der Faser in einem Wellenlängenbereich von 1535 bis 1540 nm, bei Gegenwart einer Licht-Pumpenergie, welche der Faser selbst zugeführt wird, im Wesentlichen frei von Einsattelungen ist, wobei der Kern ferner Aluminium, Germanium und Lanthan als zweite Dotierstoffe aufweist.

7. Auf Silizium basierende aktive optische Faser nach Anspruch 6, **dadurch gekennzeichnet, dass** die Emissionskurve keine Einsattelungen in dem Wellenlängenbereich mit einem Wert größer als 1 dB, bezüglich dem Emissionswert in wenigstens einem der Frequenzbänder benachbart zu dem Wellenlängenbereich, hat.

8. Auf Silizium basierende aktive optische Faser nach Anspruch 7, **dadurch gekennzeichnet, dass** die Emissionskurve keine Einsattelungen in dem Wellenlängenbereich mit einem Wert größer als 0,5 dB, bezüglich dem Emissionswert in wenigstens einem der Frequenzbänder benachbart zu dem Wellenlängenbereich, hat.

9. Auf Silizium basierende aktive optische Faser nach Anspruch 6, **dadurch gekennzeichnet, dass** der Hauptfluoreszenzdotierstoff in die Faser in Form eines Oxydes eingebaut ist.

10. Auf Silizium basierende aktive optische Faser nach Anspruch 6, **dadurch gekennzeichnet, dass** die zweiten Dotierstoffe in die Faser in Form der jeweiligen Oxyde eingebaut sind.

11. Auf Silizium basierende aktive optische Faser nach Anspruch 10, **dadurch gekennzeichnet, dass** der Lanthan-Gehalt in dem Faserkern, welcher als ein Oxyd bezeichnet wird, größer als 0,1 % pro Mol ist.

12. Auf Silizium basierende aktive optische Faser nach Anspruch 11, **dadurch gekennzeichnet, dass** der Lanthan-Gehalt in dem Faserkern, welcher als ein Oxyd bezeichnet wird, gleich oder größer als 0,2 % pro Mol ist.

13. Auf Silizium basierende aktive optische Faser nach Anspruch 10, **dadurch gekennzeichnet, dass** der Germanium-Gehalt in dem Faserkern, welcher als ein Oxyd bezeichnet wird, größer als 5 % pro Mol ist.

14. Auf Silizium basierende aktive optische Faser nach Anspruch 13, **dadurch gekennzeichnet, dass** das molare Verhältnis zwischen dem Lanthan-Gehalt und dem Germanium-Gehalt in dem Faserkern, welche als Oxyde bezeichnet werden, innerhalb von 10 bis 100 liegen.

15. Auf Silizium basierende aktive optische Faser nach Anspruch 14, **dadurch gekennzeichnet, dass** das molare Verhältnis zwischen dem Lanthan-Gehalt und dem Germanium-Gehalt in dem Faserkern, welche als Oxyde bezeichnet werden, ungefähr 50 ist.

16. Auf Silizium basierende aktive optische Faser nach Anspruch 10, **dadurch gekennzeichnet, dass** der AluminiumGehalt in dem Faserkern, welcher als ein Oxyd bezeichnet wird, größer als 1 % pro Mol ist.

17. Auf Silizium basierende aktive optische Faser nach Anspruch 16, **dadurch gekennzeichnet, dass** der Aluminium-Gehalt in dem Faserkern, welcher als ein Oxyd bezeichnet wird, größer als 2 % pro Mol ist.

18. Auf Silizium basierende aktive optische Faser nach Anspruch 9, **dadurch gekennzeichnet, dass** der Erbium-Gehalt in dem Faserkern, welcher als ein Oxyd bezeichnet wird, innerhalb von 20 bis 5000 ppm pro Mol liegt.

19. Auf Silizium basierende aktive optische Faser nach Anspruch 18, **dadurch gekennzeichnet, dass** der Erbium-Gehalt in dem Faserkern, welcher als ein Oxyd bezeichnet wird, innerhalb von 100 bis 1000 ppm pro Mol liegt.

20. Auf Silizium basierende aktive optische Faser nach Anspruch 6, **dadurch gekennzeichnet, dass** die numerische Apertur der Faser größer als 0,18 ist.

21. Aktiv-Faser-Optischer-Verstärker, welcher aufweist:
- wenigstens eine Länge einer auf Silizium basierenden aktiven optischen Faser (1, 6, 13) entsprechend einem der Ansprüche 6 bis 20,
- eine Pumpvorrichtung (2,7; 11) für die aktive Faser, welche angepasst ist, um eine optische Pumpleistung bei einer Pumpwellenlänge zu liefern,
- eine Koppelvorrichtung (3, 8; 12) innerhalb der aktiven Faser der optischen Pumpleistung und eine oder mehrere Sendesignale, bei Sendewellenlängen, welche innerhalb eines vorbestimmten Übertragungsbandes liegen,
**dadurch gekennzeichnet, dass** die Dotierstoffe der aktiven Faser so in funktionellem Bezug zueinander gewählt werden, dass das Signal-/Rausch-Verhältnis am Verstärkerausgang für Signale mit einer Wellenlänge in dem vorbestimmten Übertragungsband, gemessen mit einer Filterbreite von 0,5 nm, nicht kleiner als 15 dB ist.

22. Aktiv-Faser-Optischer-Verstärker nach Anspruch 21, **dadurch gekennzeichnet, dass** das vorbestimmte Übertragungsband innerhalb von 1525 bis 1560 nm liegt.

23. Aktiv-Faser-Optischer-Verstärker nach Anspruch 21, **dadurch gekennzeichnet, dass** die Dotierstoffe der aktiven Faser entsprechend dem funktionalen Bezug untereinander so ausgewählt werden, dass die maximale Änderung der Verstärkung zwischen zwei Signalen bei unterschiedlichen Übertragungswellenlängen in dem Band, gemessen bei einer Eingangsleistung ≤ -20 dBm, kleiner als 2,5 dB ist, bei Fehlen einer Filtervor-richtung, welche mit der aktiven Faser verbunden ist.

24. Aktiv-Faser-Optischer-Verstärker nach Anspruch 21, **dadurch gekennzeichnet, dass** er zwei auf Silizium basierende aktive Fasern (1, 6) aufweist, welche jeweils mit einer Pumpvorrichtung ausgestattet sind.

25. Telekommunikationssystem, welches aufweist:
- eine Sendestation, welche wenigstens zwei optische Signale mit unterschiedlichen Wellenlängen in einem vorbestimmten Wellenlängenband erzeugt, welches einen Bereich um 1535-1540 nm aufweist, wobei wenigstens eine der Signalwellenlängen in dem Bereich um 1535 - 1540 nm beinhaltet ist,
- eine Empfangsstation,
- eine optische Faserverbindungsleitung zwischen der Sendestation und der Empfangsstation, und
- wenigstens einen Aktiv-Faser-Optischen-Verstärker nach einem der Ansprüche 21 bis 23, welcher in Reihe entlang dieser Leitung angeschlossen ist,
operativ miteinander verbunden, um die optischen Signale von der Sendestation zur Empfangsstation zu übertragen.

26. Telekommunikationssystem nach Anspruch 25, **dadurch gekennzeichnet, dass** wenigstens zwei optische Verstärker entlang der Leitung in Reihe miteinander verbunden sind.

## Revendications

1. Procédé pour effectuer la régulation du rapport signal / bruit optique à la réception, dans une bande de longueurs d'ondes prédéterminée, dans un système de télécommunication optique comprenant :
- un émetteur optique (27, 28; 37-40),
- un récepteur optique (33, 34; 47-49),
- une ligne de fibre optique (29; 41) reliant lesdits émetteur et récepteur, et
- au moins un amplificateur optique à fibre active (32a, 32-32'''; 44, 45-45"') intercalé dans ladite ligne,
dans lequel ladite fibre active est une fibre de silice (1, 6; 13) qui comprend de l'erbium comme dopant principal et présente une courbe d'émission ayant une zone d'émission dans une plage de longueurs d'ondes comprise à l'intérieur de ladite bande de longueurs d'ondes prédéterminée, à l'intérieur de laquelle il y a une dépression de l'émission par rapport aux zones adjacentes dans ladite bande de longueurs d'ondes prédéterminée, ledit procédé comprenant l'élimination ou la réduction de ladite dépression de la courbe d'émission en utilisant de l'aluminium, du germanium et du lanthane comme dopants secondaires dans la fibre active.

2. Procédé selon la revendication 1, **caractérisé en ce que** ladite bande de longueurs d'ondes prédéterminée est comprise entre 1525 et 1560 nm.

3. Procédé selon la revendication 1, **caractérisé en ce que** ledit rapport signal / bruit optique, mesuré à une largeur de filtre de 0,5 nm, est supérieur à 15 dB.

4. Procédé selon la revendication 1, **caractérisé en ce que** ledit système comprend au moins deux amplificateurs optiques à fibre active intercalés en série dans ladite ligne de fibre optique.

5. Procédé selon la revendication 1, **caractérisé en ce que** ladite dépression est réduite à une valeur inférieure à 1 dB par rapport à la valeur de l'émission dans au moins une des zones adjacentes dans ladite bande.

6. Fibre optique active à base de silice (1, 6, 13), en particulier pour des amplificateurs de télécommunications optiques, présentant une ouverture numérique supérieure à 0,15, ladite fibre possédant un noyau dopé avec de l'erbium comme dopant fluorescent principal, **caractérisée en ce que** la courbe d'émission de ladite fibre est essentiellement exempte de dépressions dans une plage de longueurs d'ondes de 1535 à 1540 nm en présence d'une énergie de pompage lumineuse transmise à la fibre elle-même, ledit noyau comprenant de plus de l'aluminium, du germanium et du lanthane comme dopants secondaires.

7. Fibre optique active à base de silice selon la revendication 6, **caractérisée en ce que** ladite courbe d'émission n'a pas de dépressions dans ladite plage de longueurs d'ondes d'une valeur supérieure à 1 dB par rapport à la valeur de l'émission dans au moins une des bandes de longueurs d'ondes adjacentes à ladite plage de longueurs d'ondes.

8. Fibre optique active à base de silice selon la revendication 7, **caractérisée en ce que** ladite courbe d'émission n'a pas de dépressions dans ladite plage de longueurs d'ondes d'une valeur supérieure à 0,5 dB par rapport à la valeur de l'émission dans au moins une des bandes de longueurs d'ondes adjacentes à ladite plage de longueurs d'ondes.

9. Fibre optique active à base de silice selon la revendication 6, **caractérisée en ce que** ledit dopant fluorescent principal est incorporé à la fibre sous la forme d'un oxyde.

10. Fibre optique active à base de silice selon la revendication 6, **caractérisée en ce que** lesdits dopants secondaires sont incorporés à la fibre sous la forme des oxydes respectifs.

11. Fibre optique active à base de silice selon la revendication 10, **caractérisée en ce que** la teneur en lanthane dans le noyau de fibre présent sous la forme d'un oxyde, est supérieure à 0,1 % en moles.

12. Fibre optique active à base de silice selon la revendication 11, **caractérisée en ce que** la teneur en lanthane dans le noyau de fibre présent sous la forme d'un oxyde est supérieure ou égale à 0,2 % en moles.

13. Fibre optique active à base de silice selon la revendication 10, **caractérisée en ce que** la teneur en germanium dans le noyau de fibre présent sous la forme d'un oxyde est supérieure à 5 % en moles.

14. Fibre optique active à base de silice selon la revendication 13, **caractérisée en ce que** le rapport molaire entre la teneur en lanthane et la teneur en germanium dans le noyau de fibre, présents sous la forme d'oxydes, est compris entre 10 et 100.

15. Fibre optique active à base de silice selon la revendication 14, **caractérisée en ce que** le rapport molaire entre la teneur en lanthane à la teneur en germanium dans le noyau de fibre, présents sous la forme d'oxydes, est d'environ 50.

16. Fibre optique active à base de silice selon la revendication 10, **caractérisée en ce que** la teneur en aluminium dans le noyau de fibre, présent sous la forme d'un oxyde, est supérieure à 1 % en moles.

17. Fibre optique active à base de silice selon la revendication 16, **caractérisée en ce que** la teneur en aluminium dans le noyau de fibre, présent sous la forme d'un oxyde, est supérieure à 2 % en moles.

18. Fibre optique active à base de silice selon la revendication 9, **caractérisée en ce que** la teneur en erbium dans le noyau de fibre présent sous la forme d'un oxyde est comprise entre 20 et 5000 ppm en moles.

19. Fibre optique active à base de silice selon la revendication 18, **caractérisée en ce que** la teneur en erbium dans le noyau de fibre présent sous la forme d'un oxyde est comprise entre 100 et 1000 ppm en moles.

20. Fibre optique active à base de silice selon la revendication 6, **caractérisée en ce que** l'ouverture numérique de la fibre est supérieure à 0,18.

21. Amplificateur optique à fibre active, comprenant :
- au moins une longueur de fibre optique active à base de silice (1, 6, 13) selon l'une quelconque des revendications 6 à 20,
- un moyen de pompage (2, 7; 11) pour ladite fibre active, conçu pour fournir une puissance de pompage optique à une longueur d'onde de pompage,
- un moyen de couplage (3, 8; 12) à l'intérieur de ladite fibre active de ladite puissance de pompage optique et un ou plusieurs signaux de transmission, à des longueurs d'ondes de transmission comprises dans une bande de transmission prédéterminée,
**caractérisé en ce que** lesdits dopants de ladite fibre active sont choisis en relation fonctionnelle entre eux de telle façon que le rapport signal / bruit à la sortie de l'amplificateur pour des signaux ayant une longueur d'onde comprise dans ladite bande de transmission prédéterminée, mesuré à une largeur de filtre de 0,5 nm, ne soit pas inférieur à 15 dB.

22. Amplificateur optique à fibre active selon la revendication 21, **caractérisé en ce que** ladite bande de transmission prédéterminée est comprise entre 1525 et 1560 nm.

23. Amplificateur optique à fibre active selon la revendication 21, **caractérisé en ce que** lesdits dopants de ladite fibre active sont choisis en relation fonctionnelle entre eux de telle façon que la variation de gain maximum entre deux signaux à des longueurs d'ondes de transmission différentes dans ladite bande, mesuré à une puissance d'entrée ≤ -20 dBm, soit inférieure à 2,5 dB, en l'absence de moyen de filtrage associé à ladite fibre active.

24. Amplificateur optique à fibre active selon la revendication 21, **caractérisé en ce qu'**il comprend deux fibres actives à base de silice (1, 6) pourvues de moyens de pompage respectifs.

25. Système de télécommunication comprenant
- une station d'émission générant au moins deux signaux optiques ayant des longueurs d'ondes différentes dans une bande de longueurs d'ondes prédéterminée comprenant une plage située aux alentours de 1535-1540 nm, au moins une desdites longueurs d'ondes de signal étant comprise dans ladite plage située aux alentours de 1535-1540 nm,
- une station de réception,
- une ligne de liaison par fibre optique entre lesdites station d'émission et station de réception, et
- au moins un amplificateur optique à fibre active selon l'une quelconque des revendications 21 à 23, monté en série dans ladite ligne,
reliés fonctionnellement entre eux pour transmettre lesdits signaux optiques de ladite station d'émission à ladite station de réception.

26. Système de télécommunication selon la revendication 25, **caractérisé en ce qu'**au moins deux amplificateurs optiques sont montés en série dans la ligne.
